Europäisches Patentamt

European Patent Office

Office européen des brevets

(11) Veröffentlichungsnummer : **0 173 038**
**B1**

(12) **EUROPÄISCHE PATENTSCHRIFT**

(45) Veröffentlichungstag der Patentschrift :
**15.03.89**

(51) Int. Cl.⁴ : **F 16 K 17/12, A 47 J 27/16,**
**A 47 J 39/00**

(21) Anmeldenummer : **85108501.9**

(22) Anmeldetag : **09.07.85**

(54) Überdruckventil für einen Boiler eines Dämpfers zur Dampfbehandlung von Speisen.

(30) Priorität : **02.08.84 DE 8423019 U**

(43) Veröffentlichungstag der Anmeldung :
**05.03.86 Patentblatt 86/10**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**CH--A--   249 607**
**FR--A--   610 333**
**FR--A--   648 988**
**FR--A-- 1 173 720**
**US--A-- 1 570 461**
**US--A-- 1 620 719**
**US--A-- 2 062 218**

(73) Patentinhaber : **LechMetall Landsberg GmbH**
**Iglinger Strasse 62**
**D-8910 Landsberga. Lech (DE)**

(72) Erfinder : **Meister, Siegfried**
**Siemensstrasse 2**
**D-8910 Landsberg a. Lech (DE)**

(74) Vertreter : **Goddar, Heinz J., Dr. et al**
**FORRESTER & BOEHMERT Widenmayerstrasse 4/I**
**D-8000 München 22 (DE)**

EP 0 173 038 B1

## Beschreibung

Die Erfindung betrifft ein Überdruckventil für einen unter Dampfdruck stehenden Behälter nach dem Oberbegriff des Patentanspruches 1.

Aus der US-A-1 620 719 ist ein Überdruckventil der vorstehend angegebenen Art bekannt, bei dem der mit der Verbreiterung versehene Schaft dazu dient, bei einem Abheben des Ventilkörpers infolge auftretenden Überdrucks ein allzu weites Herausheben desselben aus dem Ventilsitz, insbesondere ein « Wegfliegen » bei plötzlichem, sehr starkem Überdruck, zu vermeiden, und bei nachlassendem Überdruck ein erneutes Anlegen des Ventilkörpers an die Dichtfläche zu gewährleisten. Der Ventilkörper kann dabei nicht so weit aus dem Endabschnitt des Rohres herausgehoben und z. B. seitlich abgekippt werden, daß ein Eingießen einer Flüssigkeit oder dergleichen in das Rohr möglich wäre.

Aus der DE-U-8 131 827 ist ein Kombi-Dämpfer bekannt, bei dem ein Boiler zur Erzeugung von Dampf dient, der über ein Verbindungsrohr dem Garraum zugeführt werden kann. Das Wasser, durch dessen Erhitzen der Dampf im Boiler erzeugt wird, enthält je nach seiner Härte gelöste Kalziumverbindungen, die sich im Laufe der Zeit auf dem Heizkörper und den Innenwänden des Boilers als sogenannter Kesselstein ablagern. Daher muß ein Möglichkeit vorgesehen sein, dem Boilerwasser Entkalkerlösung zuführen zu können. Wird bei einem derartigen Kombi-Dämpfer als Überdruckventil ein solchers der gattungsgemäßen Art verwendet, so kann zwar der Dampf bei Erreichen eines vorgegebenen Überdrucks im Boiler ins Freie entweichen, jedoch bereitet die Zuführung von Entkalkerlösung zum Boilerwasser Schwierigkeiten.

Der Erfindung liegt daher die Aufgabe zugrunde, das Überdruckventil der eingangs genannten Art so auszubilden, daß es ein Befüllen des Behälters bzw. allgemein eines Boilers der vorstehend beschriebenen Art mit Entkalkerlösung ermöglicht.

Erfindungsgemäß wird diese Aufgabe durch die im Kennzeichen des Patentanspruches 1 genannten Merkmale gelöst. Besonders bevorzugte Ausführungsformen der Erfindung sind Gegenstand der Unteransprüche.

Bei dem erfindungsgemäßen Überdruckventil ruht der Ventilkörper, dessen das Rohr nach Außen dichtende Schließkraft hauptsächlich durch das Gewicht des massiven Kerns gegeben ist, lose auf der Dichtfläche und kann daher zur Befüllung des Behälters bzw. Boilers beispielsweise mit Entkalkerlösung leicht vom Rohrende entfernt werden, bleibt jedoch durch das eingefangene Schaftende am Rohr gefangen. Damit werden zusätzliche Einrichtungen etwa zum Einspülen von Entkalkerlösung in den Behälter bzw. Boiler entbehrlich, und dennoch wird mit der sehr einfachen Konstruktion ein den Sicherheitsforderungen genügender Verschluß des Boilers gewährleistet.

Die Erfindung wird nachstehend anhand des in der beigefügten Zeichnung dargestellten Ausführungsbeispiels im einzelnen erläutert. Es zeigen :

Fig. 1 eine schematische perspektivische Ansicht eines Teils eines mit den Merkmalen der Erfindung ausgerüsteten Dämpfers ;

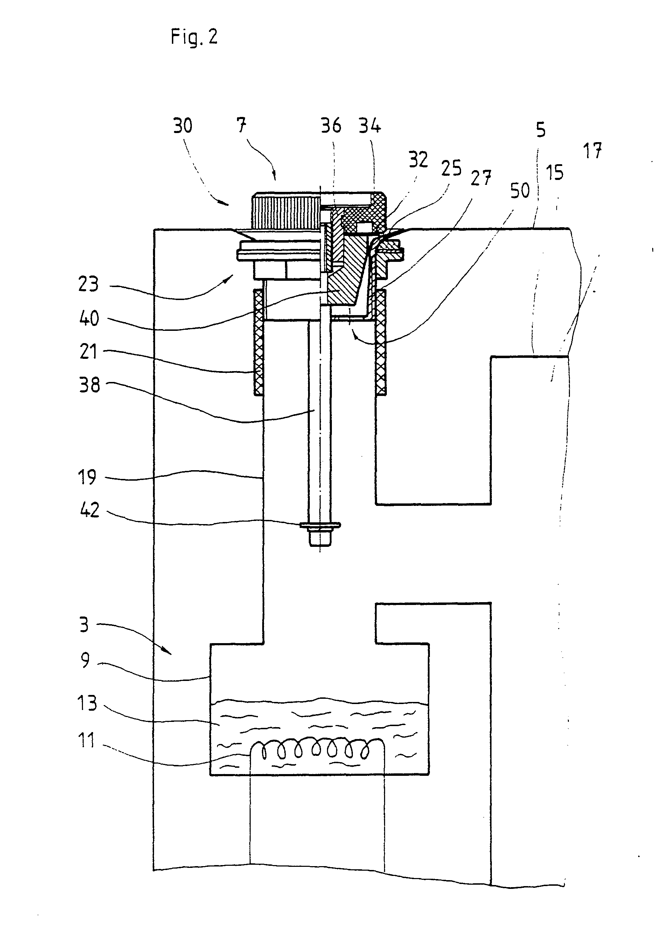

Fig. 2 eine schematische Darstellung des Überdruckventils, teilweise im Achsialschnitt

Fig. 3 eine Draufsicht auf das Einfüllsieb gemäß Fig. 2.

Der im einzelnen in der Gebrauchsmusterschrift 81 31 827 beschriebene Combi-Dämpfer weist hinter einem Bedienungsfeld 1 den Betriebsteil auf, zu dem neben der erforderlichen Steuerung ein Dampferzeuger 3 in Form eines elektrisch beheizten Boilers gehört. Aus einer Deckplatte 5 ragt ein Überdruckventil 7 nach oben vor, aus welchem Dampf entweichen kann, der dem Boiler 3 bei Überschreiten eines durch das Überdruckventil bestimmten maximalen Druckes entströmt.

Der Boiler 3 besteht im wesentlichen aus einem Wasserkessel (Behälter) 9, in welchem ein elektrischer Heizer 11, etwa in der Form einer oder mehrerer Heizpatronen, angeordnet ist. Im Betrieb ist der Wasserkessel 9 den Heizer 11 überdeckend mit Wasser 13 gefüllt, das aus einer nicht dargestellten Speiseleitung in den Wasserkessel 9 einströmen kann.

Vom oberen Ende des Wasserkessels 9 führt ein Dampfrohr 15 über ein Knie zum Garraum 17, so daß durch Verkochen des Wassers 13 im Wasserkessel 9 erzeugter Dampf dem Garraum 17 zugeführt werden kann.

Vom Knie des Dampfrohrs 15 zweigt ein Rohr 19 ab, welches über eine Manschette 21 mit einem Einfüllstutzen 23 mit im wesentlichen lotrechter Achse verbunden ist. Der Einfüllstutzen 23 besteht, von der Deckplatte 5 ausgehend, aus einer trichterförmigen Einsenkung (Ventilsitz) 25, die zu einer ringförmigen Dichtfläche für eine Ringdichtung 32 des Ventilkörpers 30 ausgebildet ist.

Die Einsenkung 25 geht nach innen in einen mit Außengewinde versehenen, lotrechten Rohrstutzen 27 über, der auf das Rohr 17 ausgerichtet ist. An dem Rohrstutzen 27 ist unten ein Einfüllsieb 50 ausgebildet, dessen ebener, mit mehreren Löchern 52 versehener Boden den Rohrstutzen 27 nach innen abschließt. Zu den Löchern 52 gehört ein mittleres Loch (verengte Durchführung) 54, auf das noch eingegangen wird.

Der Ventilkörper 30 besteht aus einem zylindrischen Formteil als Kappe 34 mit gerändelter Mantelfläche, die einen nach innen vorstehenden rohrförmigen Ansatz 36 mit Innengewinde aufweist. In diesen Ansatz 36 ist ein langgestreckter, zylindrischer Schaft 38 fest eingeschraubt, der etwa um das Doppelte der achsialen Länge des Ventilkörpers 30 aus diesem vorsteht. Um den Ansatz 36 und den dem Ansatz benachbarten Teil des Schaftes 38 ist ein massiver, nach unten konisch zulaufender Klotz (kern) 40 beispielsweise aus Edelstahl befestigt. Zwischen der planen Oberfläche des Klotzes 40 und der Kappe 34 ist eine weiche Ringdichtung 32 eingespannt, die radial über den Klotz vorsteht und sich gegen die untere Außenperipherie der Kappe 34 abstützt. Am unteren Ende ist der Schaft 38 dadurch verbreitert, daß eine Scheibe als Verbreiterung 42 auf den Schaft aufgeklemmt ist. Der Außendurchmesser der Scheibe 42 ist größer als die lichte Weite der mittleren Öffnung (Loch) 54 des Einfüllsiebs 50. Wie dargestellt erstreckt sich der Schaft 38, der dünner als die erwähnte lichte Weite der Öffnung 54 ist, durch die Öffnung 54 hindurch und ragt bei auf dem Einfüllstutzen 23 aufsitzendem Ventilkörper 30 etwa bis zum Knie des Dampfrohrs 15 in das Rohr 19 hinein.

Die Schließkraft des Überdruckventils 7 ist durch das Gewicht des Ventilkörpers 30, also im wesentlichen durch das Gewicht des Klotzes 40 bestimmt, welches so bemessen ist, daß der Ventilkörper 30 aus seinem Sitz in der Einsenkung 25 abhebt, wenn der Dampfdruck im Boiler 3 einen vorgegebenen Grenzwert übersteigt. Der Dampf kann dann zwischen Klotz 40 und der Ringdichtung 32 sowie der Einsenkung 25 nach außen entweichen. Wenn der Dampfdruck im Boiler 3 geringer als der Grenzwert ist, schließt der Ventilkörper 30 durch Anlage der Ringdichtung 32 sowie ergänzend durch Anlage eines ringförmigen Bereichs der Mantelfläche des Klotzes 40 an der Dichtfläche der Einsenkung 25 das Rohr 19 dichtend ab.

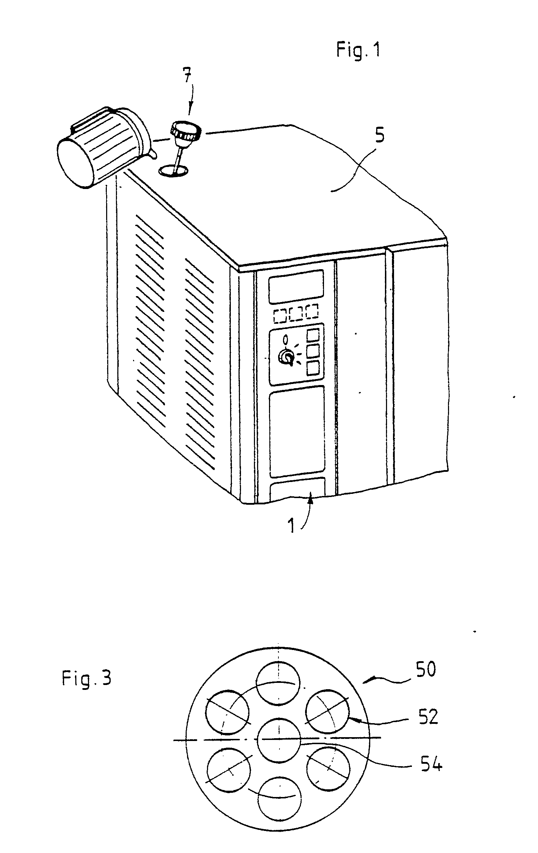

Wenn, wie in Figur 1 dargestellt, der Kessel 9 mit Enthärterlösung gefüllt werden soll, kann der Ventilkörper 30 an der Kappe 34 so weit aus der Einsenkung 25 nach oben und etwas zur Seite abgehoben werden, daß die Enthärterlösung durch die Einsenkung 25 über den Einfüllstutzen 23 und das Rohr 19 in den Kessel 9 eingegossen werden kann. Dabei bleibt der Ventilkörper durch Anlage der Scheibe 42 von unten gegen das Einfüllsieb 50 im Einfüllstutzen 23 gefangen und fällt nach Loslassen selbsttätig wieder in seinen Sitz zurück.

## Patentansprüche

1. Überdruckventil für einen unter Dampfdruck stehenden Behälter (9) mit einem vom Inneren des Behälters nach außen führenden Rohr (19), dessen äußerer Endabschnitt eine ringförmige Dichtfläche als Ventilsitz aufweist, mit einem das Rohr nach außen verschließenden Ventilkörper (30), der mit einer Ringfläche dichtend an der Dichtfläche anliegt, wobei der Ventilkörper einen massiven Kern (40) sowie einen daran anschließen langgestreckten, sich in den lotrechten Endabschnitt des Rohres erstreckenden Schaft (38) aufweist, welcher an seinem Ende eine Verbreiterung (42) aufweist, wobei das Rohr zwischen Schaftende und Kern (40) eine das Schaftende einfangende verengte Durchführung (54) besitzt, wobei der Außendurchmesser der Verbreiterung (42) größer ist als die lichte Weite der Durchführung (54) und wobei die in das Rohr sich hineinerstreckende Länge des Schafts (38) größer ist als die Länge des Ventilkörpers, dadurch gekennzeichnet, daß der Kern (40) konisch ausgebildet ist und daß die Länge und der Außendurchmesser des Schaftes (38) einerseits sowie die axiale Erstreckung und der Innendurchmesser der Durchführung (54) andererseits derart aufeinander abgestimmt sind, daß der Ventilkörper (30) bei manuellem Herausheben aus dem Ventilsitz (25) in eine Schräglage gezüglich der Achse des Rohres (19) wegbewegbar ist.

2. Ventil nach Anspruch 1, dadurch gekennzeichnet, daß der konische Kern (40) mit einer einen Teil seiner Mantelfläche bildenden Ringfläche im Einfüllstutzen (23) des Rohres anliegt.

3. Ventil nach Anspruch 1 oder 2, dadurch gekennzeichnet, daß eine Ringdichtung (32) am Kern (40) ausgebildet ist.

4. Ventil nach Anspruch 1 oder 2, dadurch gekennzeichnet, daß eine Ringdichtung (32) zwischen dem Kern (40) und einem Handgriff (34) des Ventilkörpers (30) eingespannt ist.

5. Ventil nach einem der vorstehenden Ansprüche, dadurch gekennzeichnet, daß die Verbreiterung durch eine aufgeklemmte Scheibe (42) gebildet ist.

6. Ventil nach einem der vorstehenden Ansprüche, dadurch gekennzeichnet, daß die verengte Durchführung durch eine zentrale Öffnung (54) eines in dem Einfüllstutzen (23) unterhalb des Ventilkörpers (30) angebrachten Einlaufsiebs (50) gebildet ist.

7. Ventil nach einem der vorstehenden Ansprüche, dadurch gekennzeichnet, daß sich der Schaft (38) um ein Mehrfaches der Länge des Ventilkörpers (30) in das Rohr (19) hineinerstreckt.

8. Ventil nach einem der vorstehenden Ansprüche, dadurch gekennzeichnet, daß das Rohr (19) als Abzweigung von einem Zuführrohr (15) für Dampf ausgebildet ist, das das Innere des Behälters (Boiler (3) mit einem Garraum (17) zur Dampfbehandlung von Speisen verbindet.

## Claims

1. An excess pressure valve for a container (9) under steam pressure and comprising a pipe (19) extending outwardly from the container interior and having an annular sealing surface as valve seat at its outer end, the device also comprising a valve body (30) which externally closes the pipe and has an annular surface bearing in sealing-tight manner on the sealing surface, the valve body having a solid core (40) and an adjacent elongate shank (38) extending into the vertical end portion of the pipe, the shank having a wide portion (42) at one end and the pipe having a constricted bushing (54) between the shank end and the core (40) and trapping the shank end, the outer diameter of the wide portion (42) being greater than the internal width of the bushing (54), and the length of the shank (38) extending into the pipe is greater than the length of the valve body, characterised in that the core (40) is made conical and the length and the outer diameter of the shank (38) on the one hand and the axial length and inner diameter of the bushing (54) on the other hand are so coordinated that when the valve body (30) is manually lifted from the seat (25) it is movable into an oblique position relative to the axis of pipe (19).

2. A valve according to claim 1, characterised in that an annular surface forming part of the external surface of the conical core (40) bears against the filling nozzle (23) of the pipe.

3. A valve according to claim 1 or 2, characterised in that an annular seal (32) is formed on the core (40).

4. A valve according to claim 1 or 2, characterised in that an annular seal (32) is clamped between the core (40) and a handle (34) of the valve body (30).

5. A valve according to any of the preceding claims, characterised in that the wide portion is formed by a clamped disc (42).

6. A valve according to any of the preceding claims, characterised in that the constricted bushing is formed by a central opening (54) in an inlet strainer (50) disposed in the filling nozzle (23) below the valve body (30).

7. A valve according to any of the preceding claims, characterised in that the shank (38) extends into the pipe (19) by a multiple of the length of the valve body (30).

8. A valve according to any of the preceding claims, characterised in that the pipe (19) branches off from a steam supply pipe (15) which connects the interior of the container (boiler (3)) to a cooking chamber (17) for steam treatment of food.

## Revendications

1. Soupape de sûreté pour récipient (9) sous pression de vapeur, munie d'un tube (19) allant de l'intérieur du récipient à l'extrérieur, dont la section d'extrémité extérieure présente, comme siège de soupape, une surface de joint annulaire, avec un corps de soupape (30) obturant le tube vers l'extérieur, et qui s'applique de façon étanche contre la surface de joint par une surface annulaire, le corps de soupape possédant un noyau massif (40) ainsi qu'une tige (38) se raccordant à celui-ci et s'étendant longitudinalement jusque dans la section d'extrémité verticale du tube, tige (38) qui présente à son extrémité un élargissement (42), le tube possédant, entre l'extrémité de tige et le noyau (40), un passage (54) étroit enserrant l'extrémité de la tige, le diamètre extérieur de l'élargissement (42) étant supérieur au diamètre intérieur libre du passage (54) et la longueur de la tige (38) s'étendant dans le tube étant supérieure à la longueur du corps de soupape, caractérisée par le fait que le noyau (40) est conique et que la longueur et le diamètre extérieur de la tige (38), d'une part, ainsi que l'étendue axiale et le diamètre intérieur du passage (54), d'autre part, sont accordés les uns aux autres de manière que le corps de soupape (30) puisse être amené par soulèvement manuel, depuis le siège de soupape (25), dans une position inclinée par rapport à l'axe du tube (19).

2. Soupape selon la revendication 1, caractérisée par le fait que le noyau conique (40) repose dans un raccord de remplissage (23) du tube, par une surface annulaire formant une partie de sa surface enveloppe.

3. Soupape selon la revendication 1 ou 2, caractérisée par le fait qu'un joint annulaire (32) est formé sur le noyau (40).

4. Soupape selon la revendication 1 ou 2, caractérisée par le fait qu'un joint annulaire (32) est serré entre le noyau (40) et une manette (34) du corps de soupape (30).

5. Soupape selon l'une des revendications précédentes, caractérisée par le fait que l'élargissement est formé par un disque (42) fixé par serrage.

6. Soupape selon l'une des revendications précédentes, caractérisée par le fait que le passage étranglé est formé par un orifice central (54) d'un crible de remplissage (50) monté dans le raccord de remplissage (23) au-dessous du corps de soupape (30).

7. Soupape selon l'une des revendications précédentes, caractérisée par le fait que la tige (38) se prolonge dans le tube (19) d'un multiple de la longueur du corps de soupape (30).

8. Soupape selon l'une des revendications précédentes, caractérisée par le fait que le tube (19) est formé par une dérivation d'un tube d'amenée (15) pour de la vapeur, qui, pour le traitement à la vapeur d'aliments, relie l'intérieur du récipient (bouilloire 31) à un garde-manger (17).

Fig. 1

Fig. 3

Fig. 2